Europäisches Patentamt

**European Patent Office**

**Office européen des brevets**

(11) Numéro de publication: **0 100 253**
**A1**

# (12) DEMANDE DE BREVET EUROPEEN

(21) Numéro de dépôt: **83401325.2**

(22) Date de dépôt: **28.06.83**

(51) Int. Cl.³: **A 01 G 13/04**

(30) Priorité: **26.07.82 FR 8213002**

(43) Date de publication de la demande: **08.02.84 Bulletin 84/6**

(84) Etats contractants désignés: **DE GB NL**

(71) Demandeur: **Laguerre, Maxime, La Tourelle Dorceau, F-61110 Remalard (FR)**

(72) Inventeur: **Laguerre, Maxime, La Tourelle Dorceau, F-61110 Remalard (FR)**

(74) Mandataire: **Marquer, Francis, 35, Avenue Victor Hugo Résidence Chamfleury, F-78180 Voisins-le-Bretonneux (FR)**

(54) **Cloche en matière plastique, à dessus perforé, pour l'horticulture et le jardinage.**

(57) Cloche pour l'horticulture et le jardinage, en matière plastique translucide. Son fond supérieur est muni d'orifices (41-42) de taille et en nombre suffisants pour permettre l'arrosage. Ces orifices sont disposés au fond d'une saillie (43) orientée vers l'intérieur, afin d'assurer l'écoulement de l'eau de condensation à l'intérieur de la cloche.

0100253

- 1 -

<u>CLOCHE EN MATIERE PLASTIQUE, A DESSUS PERFORE, POUR L'HORTI-</u>
<u>CULTURE ET LE JARDINAGE</u>.

L'invention se rapporte aux abris en forme de cloche dont on recouvre une plante à forcer ou à protéger du froid.
Ces cloches sont traditionnellement en verre et leur fonction principale est d'accélérer la pousse de la plante en concentrant la chaleur solaire et en diminuant l'évaporation.
Elles présentent divers inconvénients qui ont conduit, en pratique, à l'abandon quasi général de leur emploi par les professionnels. En effet, outre leur poids excessif, leur prix élevé et leur fragilité, elle ne procurent pas une température suffisamment modérée lorsque le soleil est relativement fort et la chaleur qui y règne devient souvent telle qu'il faut alors les soulever sur un côté, ou même les blanchir, pour atténuer l'ardeur du rayonnement. Ces opérations sont onéreuses.

On a proposé, dans le brevet US-A-3214865, de réaliser une cloche en matière plastique transparente ou translucide, de forme ogivale, munie de pattes à sa base pour son ancrage dans le sol, et d'orifices d'aération sur sa paroi latérale et à son sommet.

Cette cloche présente l'inconvénient grave de ne pas fournir à la plante l'humidité convenable en particulier lorsque le soleil est fort.

L'invention se propose de réaliser une cloche exempte des inconvénients ci-dessus et remplissant parfaitement sa fonction d'entourer la plante d'une atmosphère ayant la teneur convenable en humidité et en oxygène, avec une température suffisamment modérée dans toutes les circonstances. Ce résultat remarquable est obtenu grâce au fait que la cloche suivant l'invention, réalisée en matière plastique translucide et munie d'orifices d'aération est conformée en tronc de cône, son fond supérieur ayant une surface suffisante pour assurer la collecte de l'eau de pluie ou d'arrosage, lesdits orifices étant disposés au fond d'une surface en saillie orientée vers l'intérieur de la cloche.

D'autres particularités, ainsi que les avantages de l'invention, apparaîtront clairement à la lumière de la description détaillée ci-après.

Au dessin annexé :

la figure 1 est une vue d'une cloche suivant l'invention, en coupe suivant le plan brisé I-I de la figure 2 ; dont

la figure 2 est une vue de dessus.

La cloche figurée au dessin est réalisée en matière plastique translucide. Elle a une forme tronconique, avec par exemple un diamètre principal de 237 mm pour sa grande base, de 186,5 mm pour sa petite base et une hauteur de 180 mm. Il importe que le diamètre de la petite base soit au moins égal aux trois quarts de celui de la grande base, pour que le fond supérieur constitue une surface suffisante de collecte de l'eau de pluie ou d'arrosage.

Le poids total de cette cloche est très faible, par exemple de 115 grammes. Pour assurer cependant sa stabilité en cas de vent, elle comporte des pieds triangulaires, tels que 1, 2, 3, régulièrement distribués le long de son bord inférieur, au nombre de six dans l'exemple illustré, et qui s'enfoncent dans le sol.

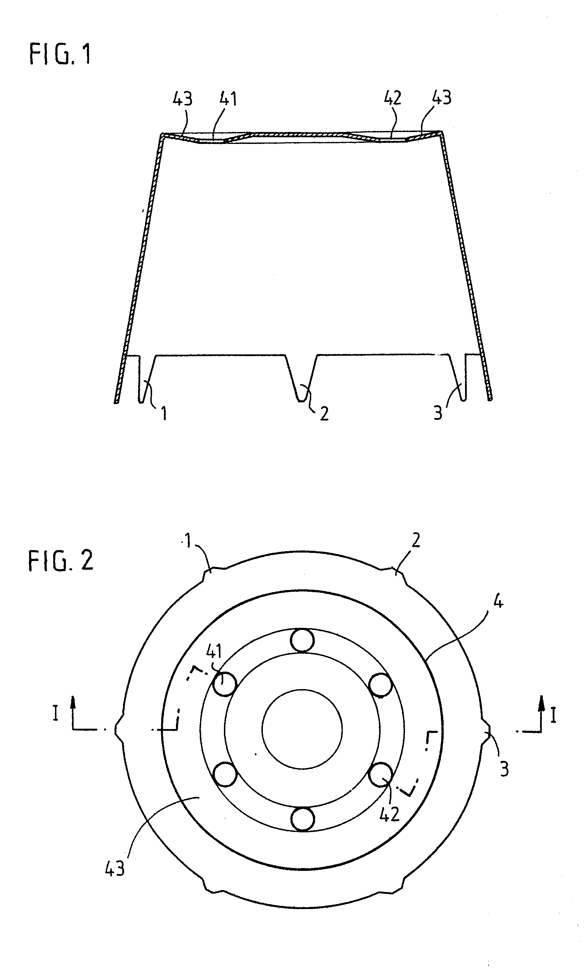

Le fond supérieur 4 comporte une pluralité d'orifices, tels que 41-42, régulièrement distribués dans une zone circulaire voisine de sa périphérie. A titre d'exemple, six orifices ayant 16 mm de diamètre et centrés sur un cercle de 120 mm de diamètre ont été représentés. Pour faciliter l'écoulement de l'eau de pluie ou d'arrosage recueillie sur le fond vers les orifices, ceux-ci sont entourés d'une sorte de gouttière circulaire dont le profil apparaît en 43 à la figure 1.

Grâce à sa translucidité, la cloche ne laisse passer qu'un rayonnement solaire atténué et la température s'y élève d'une manière satisfaisante, sans qu'il soit nécessaire de la soulever d'un côté quand elle est directement frappée par les rayons du soleil. Les orifices, permettent non seulement de faire pénétrer l'eau de pluie ou d'arrosage dans la cloche, mais en outre, grâce au fait qu'ils sont ménagés au fond d'une surface saillante vers l'intérieur, d'assurer un écoulement de l'eau de condensation à l'intérieur de la cloche. Cette eau forme une goutte sur la surface saillante autour de l'orifice et retombe directement au voisinage de la plante.

Des essais ont montré que cette cloche permet des semis précoces, en protégeant la jeune plante des gelées blanches, et accélère la pousse sans risque de brûlure par excès de chaleur et surtout, sans dessèchement de la plante. Ces avantages, joints à la protection des semis contre les prédateurs, sont particulièrement importants lors des cultures de printemps.

Cette cloche est évidemment peu onéreuse et incassable.

Il va de soi que la forme et les dimensions illustrées au dessin ne sont pas limitatives.

Revendications de brevet

1. Cloche pour l'horticulture et le jardinage munie d'orifices d'aération,
caractérisée en ce qu'elle est conformée en tronc de cône, son fond supérieur qui constitue la petite base du tronc de cône, ayant une surface suffisante pour assurer la collecte de l'eau de pluie ou d'arrosage et en ce que lesdits orifices (41-42) sont disposés au fond d'une surface en saillie (43) orientée vers l'intérieur de la cloche.

2. Cloche selon la revendication 1,
caractérisée en ce que la petite base du tronc de cône a un diamètre au moins égal aux trois quarts de celui de la grande base.

3. Cloche selon la revendication 1 ou 2,
caractérisé en ce que ladite surface en saillie est constituée par une gorge circulaire coaxiale à la petite base et formant gouttière.

FIG.1

FIG. 2

# 0100253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | GB-A-1 580 934  (SALT)<br>* Page 1, lignes 40-47; page 2, lignes 3-16; page 2, lignes 37-49; figures 4,5 * | 1-3 | A 01 G   13/04 |
| P,X | GB-A-2 094 602  (BROCK)<br>* Page 1, lignes 13-20; page 1, lignes 51-55; figure 4 * | 1 | |
| A | GB-A-2 074 835  (APPLETON)<br>* Page 1, lignes 19-21; page 1, lignes 62-90; figure 1 * | 1,2 | |
| A | FR-A-1 434 817  (BONISTALLI)<br>* Page 1, colonne de gauche, dernier paragraphe - colonne de droite, avant-dernier paragraphe; figure 1 * | 1,2 | |

DOMAINES TECHNIQUES
RECHERCHES (Int. Cl. 3)

A 01 G

Le présent rapport de recherche a été établi pour toutes les revendications

| Lieu de la recherche<br>LA HAYE | Date d'achèvement de la recherche<br>04-11-1983 | Examinateur<br>HERYGERS J.J. |
|---|---|---|